# EUROPEAN PATENT SPECIFICATION

(11) **EP 2 661 954 B1**
(45) Date of publication and mention of the grant of the patent: **12.07.2017**
(21) Application number: 13166607.5
(22) Date of filing: 06.05.2013
(51) Int. Cl.: A01G 7/04, A01G 9/20, A01M 1/22

(54) **Insect pest disinfestation lighting system**
Beleuchtungssystem für Insektenbefallbekämpfung
Système d'éclairage de désinfestation contre les insectes nuisibles

(30) Priority: 11.05.2012 JP 2012110052
(43) Date of publication of application: 13.11.2013
(73) Proprietor: Panasonic Intellectual Property Management Co., Ltd., Osaka-shi, Osaka 540-6207 (JP)
(72) Inventor: Aoki, Shinichi, Chuo-ku, Osaka 540-6207 (JP); Yamada, Makoto, Chuo-ku, Osaka 540-6207 (JP); Ishiwata, Masaki, Chuo-ku, Osaka 540-6207 (JP)
(74) Representative: Appelt, Christian W.

(56) References cited:
- EP-A1- 0 007 459
- EP-A1- 2 172 097
- WO-A1-2010/089455
- DE-U1-202010 002 088
- US-A- 5 607 711

## Description

The present invention relates to an insect pest disinfestation lighting system.

Insect pests, such as spider mites, feed on plants and are thus troublesome. Japanese Laid-Open Patent Publication No. 2011-72200 describes the use of light to attract phytoseiidae, which are predators of spider mites, to disinfest spider mites.

The insect pest disinfestation process described above involves the attraction of phytoseiidae. It is thus desirable that a lighting device be developed to disinfest spider mites without attracting phytoseiidae.

EP 2 172 097 A1 discloses a lighting device for use in the control of a plant disease caused by filamentous fungi, which has a light source emitting both of UV-B (wavelength of about 280 to 340 nm) and UV-C, in which a wavelength component with a wavelength of about 255 nm or less is cut off from wavelength components with wavelengths of about 100 to 280 nm.

It is an object of the present invention to provide an insect pest disinfestation lighting system that disinfests spider mites. The present invention relates to an insect pest disinfestation lighting system including a light source that illuminates a rear side of a leaf of a plant with light having a wavelength from 260 to 305 nm in a range of 2 to 50 µW/cm² which includes the features of the characterising portion of claim 1. The present invention provides an insect pest disinfestation lighting system that disinfests spider mites.

Other embodiments and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic diagram illustrating a first embodiment of an insect pest disinfestation lighting system including an insect pest disinfestation lighting device;
Fig. 2 is a graph schematically illustrating the spectral properties of a light source;
Fig. 3 is a table illustrating test results for conditions A to K and comparative examples 1 to 3;
Fig. 4 is a schematic diagram illustrating a second embodiment of an insect pest disinfestation lighting system including an insect pest disinfestation lighting device;
Figs. 5 to 13, 14A, 14B, 17A, and 17B are schematic diagrams illustrating examples of other insect pest disinfestation lighting systems including insect pest disinfestation lighting devices;
Figs. 15 and 16 are schematic diagrams illustrating insect pest disinfestation lighting systems including insect pest disinfestation lighting devices of the invention;
Fig. 18 is a schematic block diagram illustrating the electrical configuration of a further example of an insect pest disinfestation lighting system; and
Fig. 19 is a schematic diagram illustrating another example of an insect pest disinfestation lighting system.

A first embodiment of an insect pest disinfestation lighting system will now be described.

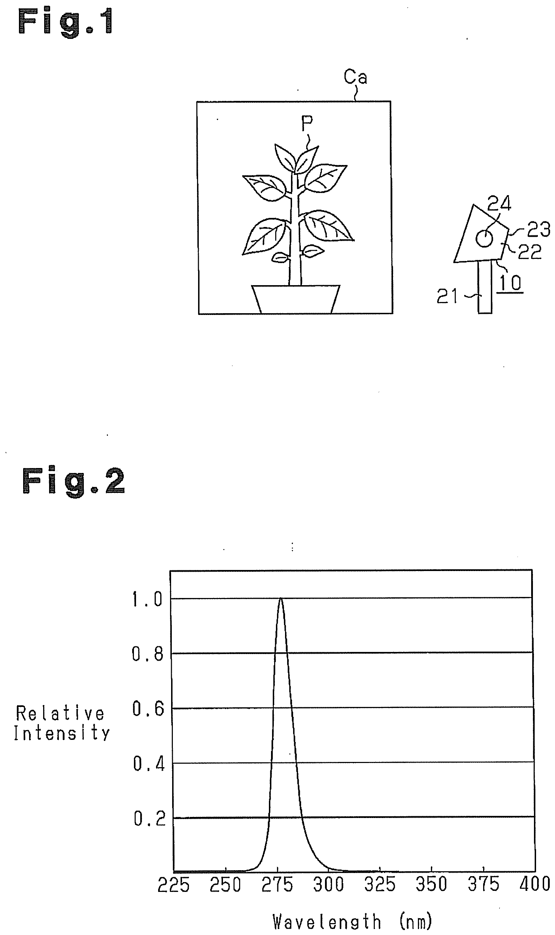

Referring to Fig. 1, an insect pest disinfestation lighting system includes an insect pest disinfestation lighting device 10.

The insect pest disinfestation lighting device 10 includes a lighting body 22, which is coupled to a distal end of a cylindrical pole 21. The lighting body 22 includes a light source 24, which is arranged in a box-shaped housing 23.

The light source 24 outputs light with a wavelength from 260 to 305 nm (UV light). In the first embodiment, referring to Fig. 2, the light source 24 outputs light having a peak wavelength of 280 nm.

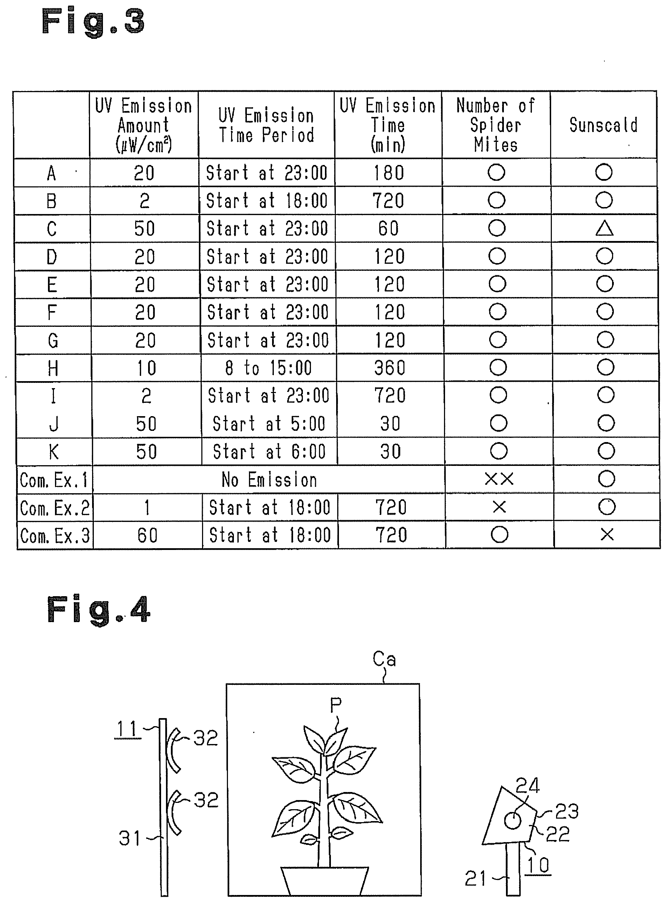

The insect pest disinfestation lighting device 10 activates the light source 24 when supplied with power from a power supply (not illustrated) to illuminate a plant P with light. Referring to Fig. 3, the light source 24 emits light under, for example, illumination condition A in which light is emitted at a UV emission amount of 20 µW/cm² for 180 minutes starting at 23:00.

The inventors of the present invention conducted a test to check the effects when emitting light from the light source 24 under condition A. The plant (e.g., cucumber) was placed in a transparent container Ca, the dimensions of which was approximately 1m×1m ×1.5m, and cultivated in the usual manner. Five spider mites were arranged on lower leaves of the plant P five to seven days after starting the cultivation of the plant P. The insect pest disinfestation lighting device 10 was activated three days after the arrangement of the spider mites. The test was conducted under the same conditions on three plants P in three transparent containers Ca to check the effects using the average observation value of the three plants P. The effects were checked based on two items, namely, the number of spider mites and sunscald. The results are illustrated in Fig. 3. The number of spider mites was visually counted using a magnifying lens. In the table, with regard to spider mites, two crosses indicate that the presence of spider mites was easily recognized, a single cross indicates that the presence of spider mites was recognized relatively easily, and a circle indicates that the presence of spider mites was hardly recognized. With regard to sunscald, a cross indicates that sunscald was recognized at multiple locations, a triangle indicates that sunscald was recognized on one or two leaves of a single plant P, and a circle indicates that sunscald was hardly recognized.

For comparison with condition A, the inventors of the present invention conducted a similar test on comparative example 1, which is illustrated in Fig. 3. The test comparative example 1 was conducted under the conditions in which the light source 24 was not activated, that is, UV light was not emitted.

### [Comparison of Condition A and Comparative Example 1]

As illustrated in Fig. 3, in comparative example 1, the presence of spider mites was easily recognized. In contrast, under condition A, the presence of spider mites was hardly recognized. Accordingly, spider mites were disinfested when the light source 24 illuminated the rear sides of leaves with light.

The insect pest disinfestation lighting system of the first embodiment has the advantages described below.
(1) The light source 24 illuminates the rear sides of the leaves of the plant P with light in the wavelength of 260 to 305 nm with a UV emission amount of 20 µW/cm², which is in the range of 2 to 50 µW/cm². The use of the light source 24 thus disinfests spider mites.
(2) The light source 24 emits light in an emission direction set in a range from the horizontal direction to the vertically upward direction to illuminate the rear sides of the leaves of the plant P. The rear sides of the leaves of the plant P are usually faced downward relative to the vertical direction. Thus, the emission of light in the above range illuminates the rear sides of the leaves with light and disinfests spider mites.

A second embodiment of an insect pest disinfestation lighting system will now be described with reference to Fig. 4. Like or same reference numerals are given to those components that are the same as the corresponding components of the first embodiment.

As illustrated in Fig. 4, the insect pest disinfestation lighting system of the second embodiment includes a light reflector 11. The insect pest disinfestation lighting device 10 and the light reflector 11 are arranged at opposite sides of the plant P.

The light reflector 11 includes a plurality of (two illustrated in Fig. 1) reflection plates 32 arranged on a cylindrical support 31. The reflection plates 32 reflect light. Miro (registered trademark), which is manufactured by Alanod, may be used as a reflective material that reflects UV light.

The insect pest disinfestation lighting device 10 activates the light source 24 when supplied with power from a power supply (not illustrated) to illuminate the plant P with light. The light source 24 emits light under one of the conditions B to D illustrated in Fig. 3. For example, under condition B, the light source 24 emitted light with a UV emission amount of 2 µW/cm² for 720 minutes starting at 18:00. Under condition C, the light source 24 emitted light with a UV emission amount of 50 µW/cm² for 60 minutes starting at 23:00. Under condition D, the light source 24 emitted light with a UV emission amount of 20 µW/cm² for 120 minutes starting at 23:00. In the same manner as the first embodiment, tests were conducted under the conditions B to D.

For comparison with condition B, the inventors of the present invention conducted a similar test on comparative example 2, which is illustrated in Fig. 3. The test on comparative example 2 was conducted under the conditions in which the light source 24 emitted light with a UV emission amount of 1 µW/cm² for 720 minutes starting at 18:00. Further, for comparison with condition B, a similar test was conducted on comparative example 3. The test on comparative example 3 was conducted under the conditions in which the light source 24 emitted light with a UV emission amount of 60 µW/cm² for 720 minutes starting at 18:00.

### [Comparison of Condition B and Comparative Example 2]

As illustrated in Fig. 3, in comparative example 2, the presence of spider mites was recognized relatively easily. In contrast, under condition B, the presence of spider mites was hardly recognized. Accordingly, spider mites were disinfested when the light source 24 illuminated the rear sides of leaves with light at a UV emission amount of 2 µW/cm².

### [Comparison of Conditions B to D and Comparative Example 2]

As illustrated in Fig. 3, in comparative example 3, sunscald was recognized on multiple leaves of a single plant P. In contrast, under condition B, sunscald was hardly recognized. From the test results, it may be understood that sunscald occurs when the UV emission amount is simply increased. When adjusting the UV emission amount of the light source to 50 µW/cm² like under condition C, sunscald was recognized on one to two leaves of a single plant P. From the test result, it may be understood that by adjusting the UV emission amount of the light source to 50 µW/cm², sunscald may be relatively decreased while disinfesting spider mites. Further, when adjusting the UV emission amount of the light source to 20 µW/cm² like under condition D, sunscald was hardly recognized. From the test result, it may be understood that by adjusting the UV emission amount of the light source to 20 µW/cm², sunscald may be further decreased while disinfesting spider mites.

The second embodiment of the insect pest disinfestation lighting system has the advantages described below in addition to advantages (1) and (2).
(3) The reflection plates 32 function as reflectors that reflect the light of the light source 24. Accordingly, in addition to the light of the light source 24, the plant P is illuminated with light reflected by the reflection plates 32. This structure illuminates the leaves of the plant P with light from the light source 24 over a wide area. Thus, spider mites are effectively disinfested.

It should be apparent to those skilled in the art that the present invention may be embodied in many other specific forms without departing from the spirit or scope of the invention. Particularly, it should be understood that the present invention may be embodied in the following forms.

The second embodiment includes more than one (e.g., two) reflection plates 32. However, there may be only one reflection plate 32.

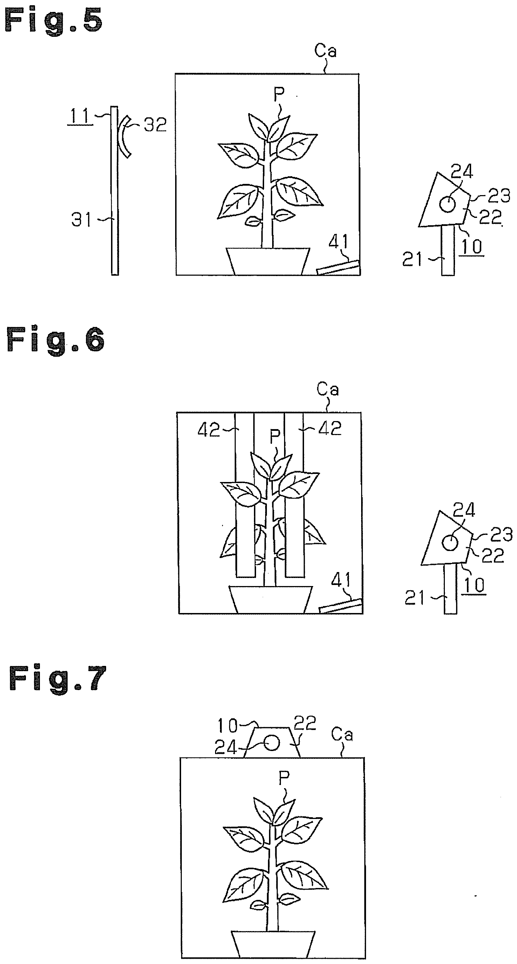

Although not particularly mentioned, in the second embodiment, for example, as illustrated in Fig. 5, a reflection plate 41 (reflector) may be arranged below the plant P. In addition to the reflection plate 41, the lighting system illustrated in Fig. 5 includes a single reflection plate 32. The reflection plate 32 and the insect pest disinfestation lighting device 10 (light source 24) are arranged at opposite sides of the plant P. In the same manner as the above embodiments, a test was conducted on the lighting system of Fig. 5. Under condition E illustrated in Fig. 3, the light source 24 emitted light with a UV emission amount of 20 µW/cm² for 120 minutes starting at 23:00. Under such a condition, the lighting system disinfested spider mites while decreasing sunscald.

The second embodiment uses curved reflection plates 32 as the reflectors. However, instead of the reflection plates 32, for example, as illustrated in Fig. 6, strips of reflection sheets 42 (reflectors) may be used. In the same manner as the above embodiments, a test was conducted on the lighting system of Fig. 6. Under condition F illustrated in Fig. 3, the light source 24 emitted light with a UV emission amount of 20 µW/cm² for 120 minutes starting at 23:00. Under such a condition, the lighting system disinfested spider mites while decreasing sunscald.

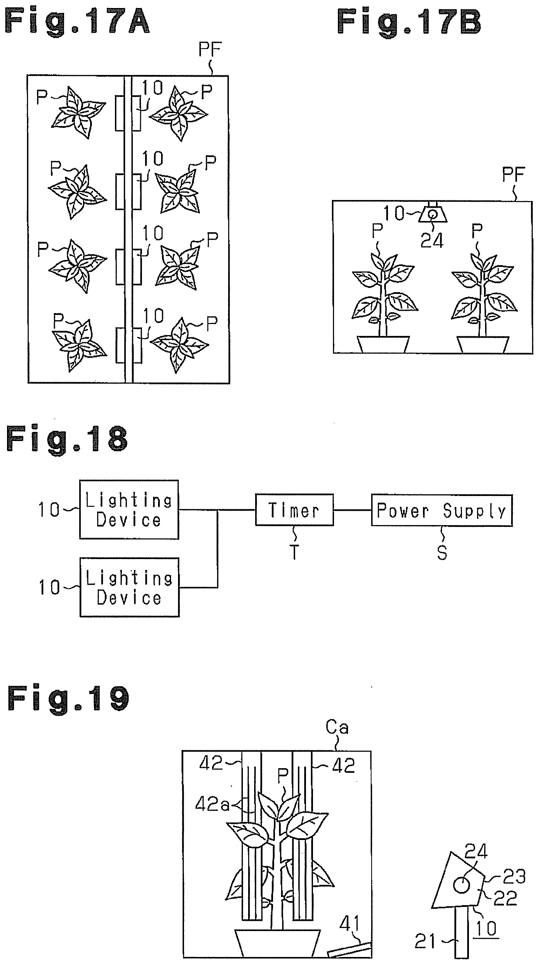

As illustrated in the example of Fig. 19, the reflection sheets 42 may include slits 42a that allow the passage of light. In such a structure, in addition to reflecting light from the light source 24, the reflection sheets 42 may pass sunlight or the like through the slits 42a. This prevents the reflection sheets 42 from impeding the growth of the plant P. Through holes may be formed in lieu of the slits 42a.

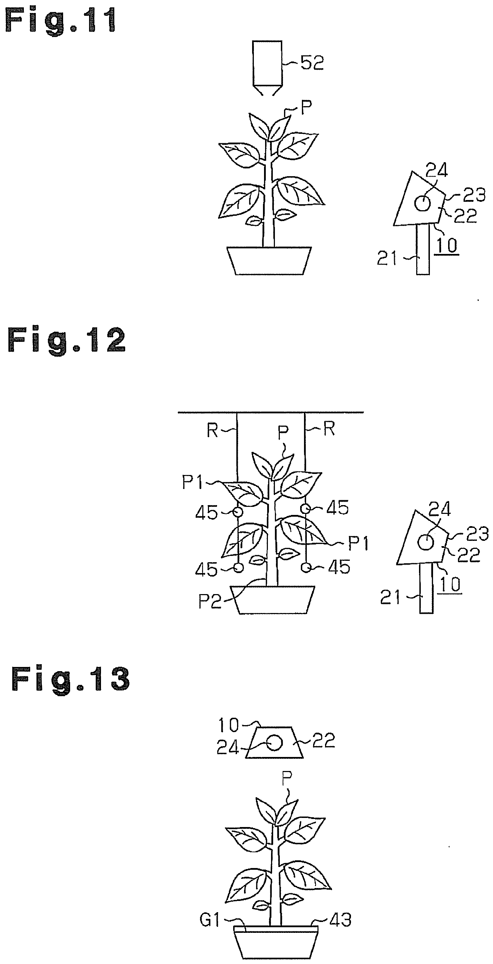

In the second embodiment, in the same manner as the first embodiment, the light source 24 emits light in a range set from the horizontal direction to the vertically upward direction. However, the emission direction is not limited to this range. For example, as illustrated in Fig. 7, a light source 24 (lighting body 22) may be arranged above the plant P to emit light in the vertically downward direction toward the plant P. In this manner, when arranging the light source 24 above the plant P, it is desirable that a reflector 43 be arranged under the plant P (e.g., culture medium G1 of the plant P) as illustrated in Fig. 13 to reflect light in the vertically upward direction. This structure allows for the rear sides of the leaves of the plant P to be illuminated with light even when the emission direction of the light from the light source 24 is set in the range from the horizontal direction to the vertically downward direction.

In the same manner as the above embodiments, a test was conducted on the lighting system of Fig. 7. Under condition G illustrated in Fig. 3, the light source 24 emitted light with a UV emission amount of 20 µW/cm² for 120 minutes starting at 23:00. Under such a condition, the lighting system disinfested spider mites while decreasing sunscald.

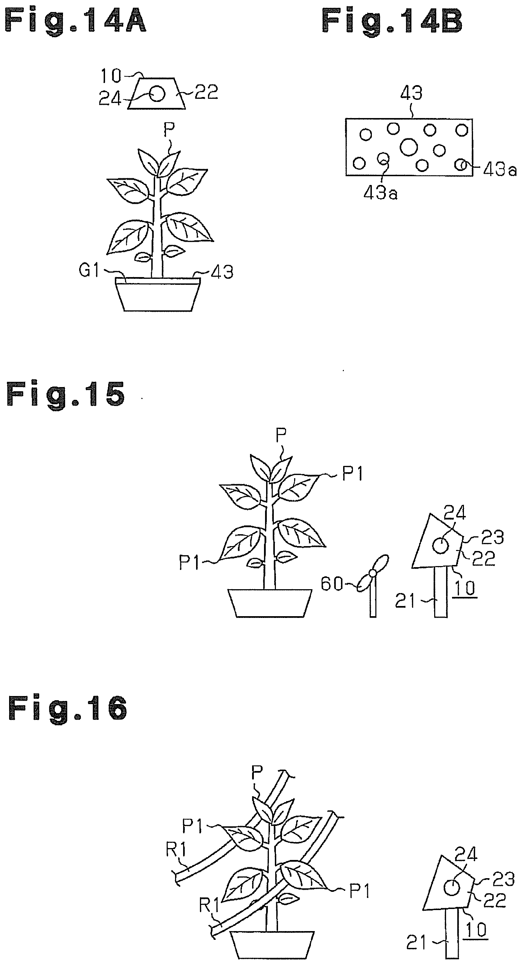

When arranging the reflector 43 under the plant P (e.g., culture medium G1 of the plant P), it is desirable that the reflector 43 include through holes 43a as illustrated in Figs. 14A and 14B. The through holes 43a allow for the passage of water when watering the culture medium G1.

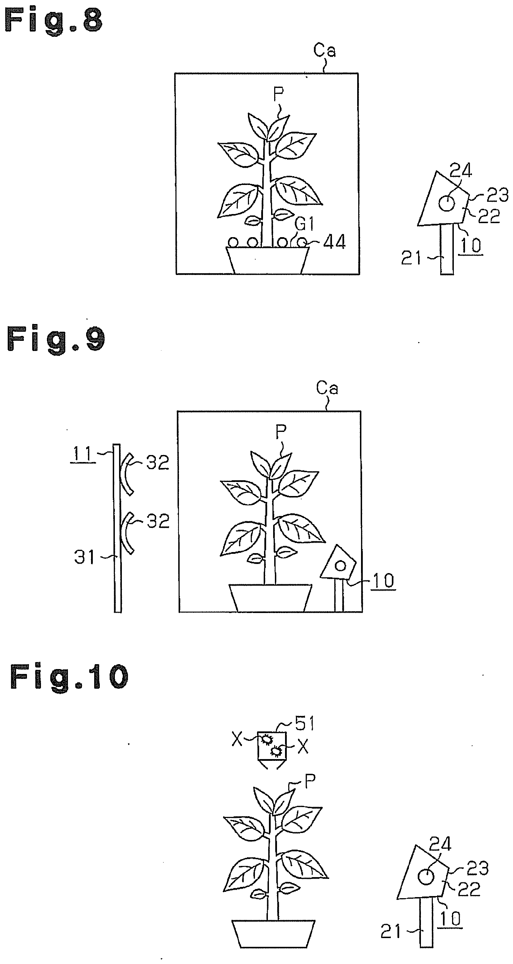

The second embodiment uses the reflection plates 32 as reflectors. Instead, as illustrated in the example of Fig. 8, reflection grains 44 (reflector) may be arranged on the culture medium G1 of the plant P. For example, the reflection grains 44 may be formed from barium sulfate (BaSO₄). This allows for the reflector to be mixed with the soil of the culture medium G1 and prevents the reflector from impeding temperature rises in the soil of the culture medium G1 when illuminated with sunlight. Further, the reflection grains 44 do not obstruct the job of a worker cultivating the plant P.

In the same manner as the above embodiments, a test was conducted on the lighting system of Fig. 8. Under condition H illustrated in Fig. 3, the light source 24 emitted light with a UV emission amount of 10 µW/cm² for 360 minutes from 08:00 to 15:00. Under such a condition, the lighting system disinfested spider mites while decreasing sunscald.

In the second embodiment, the insect pest disinfestation lighting device 10 (light source 24) is arranged outside the transparent container Ca. Instead, as illustrated in Fig. 9, the insect pest disinfestation lighting device 10 (light source 24) may be arranged inside the transparent container Ca.

In the same manner as the above embodiments, a test was conducted on the lighting system of Fig. 9. Under condition I illustrated in Fig. 3, the light source 24 emitted light with a UV emission amount of 2 µW/cm² for 720 minutes starting at 23:00. Under such a condition, the lighting system disinfested spider mites while decreasing sunscald.

Although not particularly mentioned in the above embodiments, as illustrated in Fig. 10, the insect pest disinfestation lighting system may include a predator releaser 51 that releases a predator X (e.g., amblyseius womersleyi and scolothrips takahashii) of the insect pest (spider mite), which is subject to disinfestation by the light from the light source 24. The predator X disinfests spider mites.

In the same manner as the above embodiments, a test was conducted on the lighting system of Fig. 10. Under condition J illustrated in Fig. 3, the light source 24 emitted light with a UV emission amount of 50 µW/cm² for 30 minutes starting at 05:00. Under such a condition, the lighting system disinfested spider mites while decreasing sunscald. Further, the predator X also disinfests spider mites.

Although not particularly mentioned in the above embodiments, as illustrated in Fig. 11, the insect pest disinfestation lighting system may include a pesticide sprayer 52 that sprays pesticide (e.g., Affirm insecticide) on the plant P. This structure allows for pesticide to be sprayed to locations that cannot be reached by light and disinfests spider mites in a further preferable manner.

In the same manner as the above embodiments, a test was conducted on the lighting system of Fig. 11. Under condition K illustrated in Fig. 3, the light source 24 emitted light with a UV emission amount of 50 µW/cm² for 30 minutes starting at 06:00. It is desirable that the pesticide sprayer 52 spray pesticide at the boundaries between the stem and the leaves of the plant P. Under such a condition, the lighting system disinfested spider mites while decreasing sunscald. Moreover, the pesticide disinfested spider mites in a further preferable manner.

In the second embodiment, the light source 24 and the reflection plates 32 (reflectors) are arranged at opposite sides of the plant P. Instead, as illustrated in the example of Fig. 12, spherical reflectors 45 may be arranged between distal portions P1 of the leaves of the plant P and the stem P2 of the plant P. Preferably, the reflectors 45 are supported by strings R or the like to be movable (swayable) when an air current flows. This structure allows for the reflectors 45 to sway so that the light from the light source 24 is travels in random directions. Accordingly, in comparison to when the reflectors 45 are fixed in a non-movable manner, light may be emitted over a wider range. The reflectors 45 illustrated in Fig. 12 are formed by applying reflection material of flash-spun non-woven fabrics (e.g., Tyvek, registered trademark) to spheres of foamed styrol.

The insect pest disinfestation lighting system of the invention includes a moving unit that upwardly moves the distal portions P1 of the leaves of the plant P. As illustrated in Fig. 15, a fan 60 may be used as the moving unit to produce an air current that upwardly moves the distal portions P1 of the leaves. As illustrated in Fig. 16, strings R1 arranged at the lower sides (rear sides) of the leaves may be used as another moving unit. In this case, the strings R1 are arranged in a loose state. The tension applied to the strings R1 is increased to upwardly move the distal portions P1.

After upwardly moving the distal portions P1 of the leaves of the plant P with such moving units, the light source 24 is activated so that the rear sides of the leaves of the plant P may be illuminated with light in a further preferable manner. Any structure may be used as the moving unit as long as the structure upwardly moves the distal portions P1 of the leaves to change the positions of the rear sides of the leaves and illuminate the rear sides of the leaves with light.

Although not particularly mentioned in the above embodiments, as illustrated in Figs. 17A and 17B, the insect pest disinfestation lighting device 10 (system) of each of the above embodiments and modifications are preferably used in a generally closed area such as a plant factory PF that cultivates the plants P. A generally closed area such as a plant factory PF may include a large number of spider mites that feed on the plants P, and the closed area may be free of predators of the spider mites. Thus, the arrangement of the insect pest disinfestation lighting device 10 in a generally closed area such as a plant factory PF allows for the disinfestations of spider mites.

In each of the above embodiments, the insect pest disinfestation lighting system includes a single insect pest disinfestation lighting device 10. Instead, an insect pest disinfestation lighting system may include a plurality of insect pest disinfestation lighting devices 10.

Although not particularly mentioned in the above embodiments, the light source 24 may illuminate the plant P with light during predetermined time periods between sunset and sunrise. For example, as illustrated in Fig. 18, the lighting device 10 may be electrically connected to a timer T, and the timer T may be used to determine whether or not to supply power from a power supply S to the lighting device 10. During the nighttime, there is no sunlight, and spider mites respond to even a small amount of light. This lengthens the moving distance of a spider mite, especially, an imago, and increases the time during which the spider mite is illuminated with the light from the light source 24. Thus, the emission of UV light from the light source 24 during the nighttime disinfests spider mites in a further preferable manner. Further, there may be no workers during the nighttime. This allows for reduction in the UV light emitted toward workers from the light source 24.

The present examples and embodiments are to be considered as illustrative and not restrictive, and the invention is not to be limited to the details given herein, but may be modified within the scope and equivalence of the appended claims.

## Claims

1. An insect pest disinfestation lighting system comprising a light source (24),
wherein the light source (24) is adapted to illuminate a rear side of a leaf of a plant (P) with light having a wavelength from 260 to 305 nm in a range of 2 to 50 µW/cm², wherein the insect pest disinfestation lighting system is **characterized by** further comprising a moving unit (60; R1) that is adapted to upwardly move a distal portion (P1) of the leaf of the plant (P), wherein the light source (24) is adapted to illuminate the plant (P) with light when the distal portion (P1) of the leaf of the plant (P) is upwardly moved by the moving unit (60; R1).

2. The insect pest disinfestation lighting system according to claim 1, wherein the light source (24) is adapted to illuminate the rear side of the leaf of the plant (P) with light emitted in a direction that is set in a range from a horizontal direction to a vertically upward direction.

3. The insect pest disinfestation lighting system according to claim 1, further comprising a reflector (11; 41; 42; 43; 44; 45) that is adapted to reflect light from the light source (24), wherein the plant (P) is illuminated with the light reflected by the reflector (11; 41; 42; 43; 44; 45) in addition to the light from the light source (24).

4. The insect pest disinfestation lighting system according to claim 1, further comprising a reflector (11; 41; 42; 43; 44; 45) that is adapted to reflect light from the light source (24), wherein
the light source (24) is adapted to emit light in a direction that is set in a range from a horizontal direction to a vertically downward direction, and
the reflector (11; 41; 42; 43; 44; 45) is adapted to reflect light from the light source (24) to illuminate the rear side of the leaf of the plant (P) with the reflected light.

5. The insect pest disinfestation lighting system according to claim 3 or 4, whereI n the reflector (42; 45) is arranged between a distal portion of the leaf of the plant (P) and a stem of the plant (P).

6. The insect pest disinfestation lighting system according to claim 5, wherein the reflector (42; 45) is supported to be movable.

7. The insect pest disinfestation lighting system according to any one of claims 3 to 6, wherein the reflector (42) includes a slit (42a) that passes light.

8. The insect pest disinfestation lighting system according to any one of claims 3 or 4, wherein the reflector (43) includes a through hole (43a) that passes light.

9. The insect pest disinfestation lighting system according to claim 3 or 4, wherein the reflector (44) includes a reflection grain arranged on a culture medium (G1) of the plant (P).

10. The insect pest disinfestation lighting system according to any one of claims 1 to 10, wherein the light source (24) is adapted to illuminate the plant (P) with light during a predetermined time period between sunset and sunrise.

11. The insect pest disinfestation lighting system according to any one of claims 1 to 11, further comprising a predator releaser (51) that is adapted to release a predator of an insect pest subject to disinfestation by the light from the light source (24).

12. The insect pest disinfestation lighting system according to any one of claims 1 to 12, further comprising a pesticide sprayer (52) that is adapted to spray a pesticide on the plant (P).

## Patentansprüche

1. Beleuchtungssystem zur Schadinsektenbekämpfung, welches eine Lichtquelle (24) umfasst, wobei die Lichtquelle (24) angepasst ist, eine Rückseite eines Blattes einer Pflanze (P) mit Licht mit einer Wellenlänge von 260 bis 305 nm in einem Bereich von 2 bis 50 µW/cm² zu beleuchten, wobei das Beleuchtungssystem zur Schadinsektenbekämpfung **dadurch gekennzeichnet ist, dass** es ferner eine Bewegungseinheit (60; R1) umfasst, die angepasst ist, einen distalen Abschnitt (P1) des Blattes der Pflanze (P) aufwärts zu bewegen, wobei die Lichtquelle (24) angepasst ist, die Pflanze (P) mit Licht zu beleuchten, wenn der distale Abschnitt (P1) des Blattes der Pflanze (P) durch die Bewegungseinheit (60; R1) aufwärts bewegt ist.

2. Beleuchtungssystem zur Schadinsektenbekämpfung nach Anspruch 1, wobei die Lichtquelle (24) angepasst ist, die Rückseite des Blattes der Pflanze (P) mit in einer Richtung emittiertem Licht zu beleuchten, die in einem Bereich von einer horizontalen Richtung bis zu einer vertikalen Aufwärtsrichtung eingestellt ist.

3. Beleuchtungssystem zur Schadinsektenbekämpfung nach Anspruch 1, ferner umfassend einen Reflektor (11; 41; 42; 43; 44; 45), der angepasst ist, Licht von der Lichtquelle (24) zu reflektieren, wobei die Pflanze (P) zusätzlich zum Licht aus der Lichtquelle (24) mit dem vom Reflektor (11; 41; 42; 43; 44; 45) reflektierten Licht beleuchtet wird.

4. Beleuchtungssystem zur Schadinsektenbekämpfung nach Anspruch 1, ferner umfassend einen Reflektor (11; 41; 42; 43; 44; 45), der angepasst ist, Licht von der Lichtquelle (24) zu reflektieren, wobei
die Lichtquelle (24) angepasst ist, Licht in einer Richtung zu emittieren, die in einem Bereich von einer horizontalen Richtung bis zu einer vertikalen Abwärtsrichtung eingestellt ist, und
der Reflektor (11; 41; 42; 43; 44; 45) angepasst ist, Licht aus der Lichtquelle (24) zu reflektieren, um die Rückseite des Blattes der Pflanze (P) mit dem reflektierten Licht zu beleuchten.

5. Beleuchtungssystem zur Schadinsektenbekämpfung nach Anspruch 3 oder 4, wobei der Reflektor (42; 45) zwischen einem distalen Abschnitt des Blattes der Pflanze (P) und einem Stamm der Pflanze (P) angeordnet ist.

6. Beleuchtungssystem zur Schadinsektenbekämpfung nach Anspruch 5, wobei der Reflektor (42; 45) beweglich gelagert ist.

7. Beleuchtungssystem zur Schadinsektenbekämpfung nach einem der Ansprüche 3 bis 6, wobei der Reflektor (42) einen Schlitz (42a) aufweist, welcher Licht durchlässt.

8. Beleuchtungssystem zur Schadinsektenbekämpfung nach einem der Ansprüche 3 oder 4, wobei der Reflektor (43) eine Durchgangsbohrung (43a) aufweist, welche Licht durchlässt.

9. Beleuchtungssystem zur Schadinsektenbekämpfung nach Anspruch 3 oder 4, wobei der Reflektor (44) eine auf einem Nährmedium (G1) der Pflanze (P) angeordnete Reflexionskörnung aufweist.

10. Beleuchtungssystem zur Schadinsektenbekämpfung nach einem der Ansprüche 1 bis 10, wobei die Lichtquelle (24) angepasst ist, die Pflanze (P) während eines vorab bestimmten Zeitraums zwischen Sonnenuntergang und Sonnenaufgang mit Licht zu beleuchten.

11. Beleuchtungssystem zur Schadinsektenbekämpfung nach einem der Ansprüche 1 bis 11, ferner umfassend eine Freigabevorrichtung (51) für Fressfeinde, die angepasst ist, einen Fressfeind eines mit dem Licht aus der Lichtquelle (24) zu bekämpfenden Schadinsekts freizugeben.

12. Beleuchtungssystem zur Schadinsektenbekämpfung nach einem der Ansprüche 1 bis 12, ferner umfassend ein Pestizidsprühgerät (52), das angepasst ist, ein Pestizid auf die Pflanze (P) zu sprühen.

## Revendications

1. Système d'éclairage pour la désinfestation d'insectes nuisibles comprenant une source de lumière (24),
dans lequel la source de lumière (24) est adaptée pour éclairer un côté arrière d'une feuille d'une plante (P) avec une lumière ayant une longueur d'onde comprise entre 260 et 305 nm sur une plage de 2 à 50 µW/cm²,
dans lequel le système d'éclairage pour la désinfestation d'insectes nuisibles est **caractérisé en ce qu'**il comprend en outre une unité de déplacement (60 ; R1) qui est adaptée pour déplacer vers le haut une partie distale (P1) de la feuille de la plante (P), la source de lumière (24) étant adaptée pour éclairer la plante (P) avec de la lumière lorsque la partie distale (P1) de la feuille de la plante (P) est déplacée vers le haut par l'unité de déplacement (60 ; R1).

2. Système d'éclairage pour la désinfestation d'insectes nuisibles selon la revendication 1, dans lequel la source de lumière (24) est adaptée pour éclairer le côté arrière de la feuille de la plante (P) avec une lumière émise dans une direction qui est définie sur une plage comprise entre une direction horizontale et une direction verticalement ascendante.

3. Système d'éclairage pour la désinfestation d'insectes nuisibles selon la revendication 1, comprenant en outre un réflecteur (11 ; 41 ; 42 ; 43 ; 44 ; 45) qui est adapté pour réfléchir la lumière qui provient de la source de lumière (24), dans lequel la plante (P) est éclairée avec la lumière réfléchie par le réflecteur (11 ; 41 ; 42 ; 43 ; 44 ; 45) en plus de la lumière qui provient de la source de lumière (24).

4. Système d'éclairage pour la désinfestation d'insectes nuisibles selon la revendication 1, comprenant en outre un réflecteur (11 ; 41 ; 42 ; 43 ; 44 ; 45) qui est adapté pour réfléchir la lumière qui provient de la source de lumière (24), dans lequel
la source de lumière (24) est adaptée pour émettre de la lumière dans une direction qui est définie sur une plage comprise entre une direction horizontale et une direction verticalement descendante, et
le réflecteur (11 ; 41 ; 42 ; 43 ; 44 ; 45) est adapté pour réfléchir la lumière qui provient de la source de lumière (24) afin d'éclairer le côté arrière de la feuille de la plante (P) avec la lumière réfléchie.

5. Système d'éclairage pour la désinfestation d'insectes nuisibles selon la revendication 3 ou 4, dans lequel le réflecteur (42 ; 45) est prévu entre une partie distale de la feuille de la plante (P) et une tige de la plante (P).

6. Système d'éclairage pour la désinfestation d'insectes nuisibles selon la revendication 5, dans lequel le réflecteur (42 ; 45) est supporté afin d'être mobile.

7. Système d'éclairage pour la désinfestation d'insectes nuisibles selon l'une quelconque des revendications 3 à 6, dans lequel le réflecteur (42) comprend une fente (42a) qui laisse passer la lumière.

8. Système d'éclairage pour la désinfestation d'insectes nuisibles selon l'une quelconque des revendications 3 ou 4, dans lequel le réflecteur (43) comprend un trou traversant (43a) qui laisse passer la lumière.

9. Système d'éclairage pour la désinfestation d'insectes nuisibles selon la revendication 3 ou 4, dans lequel le réflecteur (44) comprend un grain de réflexion prévu sur un milieu de culture (G1) de la plante (P).

10. Système d'éclairage pour la désinfestation d'insectes nuisibles selon l'une quelconque des revendications 1 à 10, dans lequel la source de lumière (24) est adaptée pour éclairer la plante (P) avec une lumière pendant une durée prédéterminée entre le lever et le coucher du soleil.

11. Système d'éclairage pour la désinfestation d'insectes nuisibles selon l'une quelconque des revendications 1 à 11, comprenant en outre un dispositif de libération de prédateur (51) qui est adapté pour libérer un prédateur d'un insecte nuisible à désinfester à l'aide de la lumière qui provient de la source de lumière (24).

12. Système d'éclairage pour la désinfestation d'insectes nuisibles selon l'une quelconque des revendications 1 à 12, comprenant en outre un pulvérisateur de pesticide (52) qui est adapté pour pulvériser un pesticide sur la plante (P).
